# EUROPEAN PATENT SPECIFICATION

(11) **EP 3 716 782 B1**
(45) Date of publication and mention of the grant of the patent: **14.08.2024**
(21) Application number: 17817771.3
(22) Date of filing: 29.11.2017
(51) Int. Cl.: A23L 2/44, A23L 2/52, A23L 2/54, A23L 33/105

(54) **USE OF A HEALTHY DRINK**
VERWENDUNG EINES GESUNDES GETRÄNKEPRODUKT
UTILISATION D'UNE BOISSON SAINE

(43) Date of publication of application: 07.10.2020
(73) Proprietor: Grow Capital Oy, 01510 Vantaa (FI)
(72) Inventor: KUOSSARI, Mikko, 05820 Hyvinkää (FI)
(74) Representative: Hovinen, Jari Juhani
(86) International application number: PCT/FI2017/050843
(87) International publication number: WO 2019/106223

(56) References cited:
- CN-A- 1 131 002
- KR-A- 20170 034 880
- RU-C1- 2 065 280
- RU-C1- 2 624 965
- SU-A1- 1 181 614
- US-B1- 7 273 069

## Description

### The field of the invention

The invention is related to healthy drinks, such as for example organic drinks.

### State of the art

People are nowadays more and more aware of healthy effects of different kind of natural food and drinks. For example organic drinks are known for their healthy effects. A problem with organic drinks has been substantially short preservation time. Especially when spruce sprout or equivalent conifer sprout is used a short preservation time is a problem, and this why such sprouts have been used in drinks with unhealthy preservatives and ingredients, which may even cause cancer, as some research results have indicated.

Document KR 2017 0034880 A describes a process and beverage obtained from pine needle extract, carbonic acid, citron, citric acid, sugar and water. Document RU 2 624 965 C1 describes a process and a beverage obtained from pine needle extract, sodium saccharin, carbon dioxide and water. Documents CN 1 131 002 A and SU 1 181 614 A1 describe a process and a beverage obtained from pine juice or conifer, CO2 (carbonic acid), citric acid, sugar and water. Document RU 2 065 280 describes a process and a beverage obtained from pine buds, carbonic acid, citric acid, sugar and water.

### Brief description of the invention

The object of the invention is an advanced healthy drink which has long preservation time. This is achieved by use of carbon acid as a preservative in manufacturing of a healthy drink. The drink is manufactured by using spruce sprout or equivalent conifer sprout, water, carbon acid and citric acid.

The invention is based on formation of a healthy drink, which consists of spruce sprout or equivalent conifer sprout, water and carbon acid and/or an equivalent preservative in the drink, and in the formation for example unhealthy ingredients are excluded.

Benefit of the invention is that on the basis of the invention can be achieved a unique healthy drink consisting of spruce sprout or equivalent conifer sprout and having a longer preservation time than prior art healthy drinks.

### Detailed description of the invention

The invention is defined by the claims.

A healthy drink according to the present invention has several novel features A novel healthy drink has been achieved consisting of spruce sprout or equivalent conifer sprout without any unhealthy substances, e.g. ingredients and/or preservatives. This is based on use of carbon acid as preservative with said sprout and water. A typical carbon acid is a compound of carbondioxide (CO₂) and water with a chemical formula H₂CO₃. Carbondioxide, that dissolves in water, forms carbon acid. Carbon acid can comprise carbonates (E₅₀₀ - E₅₀₄) as salts.

In one exemplary embodiment according to the present invention water and spruce sprout or equivalent conifer sprout are mixed and sluiced into a bottle. After that carbondioxide is dissolved in water that is in bottle and carbon acid is formed. In this chemical process oxygen is deleted from the bottle and after that the bottle is closed as being oxygen tight. Carbondioxide can be added to the bottle for example in a gaseous form inside a tablet or similar, or directly in a gaseous form, e.g. through a tube, or in a liquid form. The formed carbon acid is a very effective preservative in a healthy drink inside a bottle in which is no oxygen.

It is disclosed that healthy drink is manufactured in a process by using spruce sprout or equivalent conifer sprout, water, and carbon acid. The carbon acid is a preservative in the drink. All other substances, such as e.g. ingredients and preservatives, can be excluded in the process.

It is disclosed that the drink is manufactured by using spruce sprout or equivalent conifer sprout, water, and carbon acid by mixing carbon acid and possible other preservatives to a liquid of water and spruce sprout or equivalent conifer sprout. The water can be warmed before or during the mixing. The mixing can be also performed without warming of the water.

It is disclosed that the healthy drink is manufactured by using spruce sprout or equivalent conifer sprout, water, and carbon acid, the spruce sprout or equivalent conifer sprout being in form of powder, which powder is mixed to the water and carbon acid and to possible other preservatives. The water can be warmed before or during the mixing. The mixing can be also performed without warming of the water.

In other embodiments according to the present invention as preservatives with carbon acid can be used for example citron acid or citron or both of them. Citron acid or citron can be added to the healthy drink e.g. by using spoiled water. Spoiled water can be poured over spruce sprouts, and after that citron acid and/or citron can be added to the mix of water and spruce sprouts, and then carbon acid is added or preferably formed by using carbondioxide as described above. In the embodiment the spruce sprout or equivalent conifer sprout being in form of powder, spoiled water can be poured over spruce sprout powder, and after that citron acid and/or citron can be added to the mix of water and spruce sprouts, and when temperature of the water in the mix is colder then carbon acid is added or preferably formed by using carbondioxide as described above.

For example in EU countries carbon acid, citron acid and citron are accepted as organic preservatives, and thus the healthy drink according to the present invention can be accepted as an organic drink.

In one embodiment according to the present invention the used water is natural mineral water. For example one special healthy mineral water from an Finnish underground spring can be used. Said mineral water comprises as mineral values in milligrams per litre: Natrium Na+ 85, Kalium K+ 4,1 , Kalsium Ca2+ 51, Magnesium Mg2+ 13, Bicarbonate HCO3 210, Cloride CI-110, Sulfate SO42- 27 and Fluoride F- 0,50. The PH value can be e.g. 8,3. The TDS (Total Dissolved Solids) value can be e.g. 519. In this kind of novel healthy drink, antioxidants and A and C vitamins of the spruce sprout or equivalent sprout together with positive healthy effects of the special mineral water with its mineral values forms a novel and unique healthy drink.

In manufacturing processes sugar can be added or formed to the healthy drink.

Spruce sprout or equivalent can be dried for example in oven with a maximum temperature 35 C, and after that the sprout can be pulverized, or the sprout can be dried in a freezer, and after that it can be pulverized. Especially drying in a freezer guarantees splendid flavor, taste and very important nutritive substances of the spruce sprout or equivalent sprout. In a form of dried powder the spruce sprout can be preserved very long times, e.g. many years. When the spruce sprout is mixed into water, it can be preserved only a short time, e.g. a couple of days, but the carbon acid used according to the present invention substantially lengthens the preservation times e.g. to months or even for example to one year.

## Claims

1. Use of carbon acid as a preservative in manufacturing of a healthy drink, **characterized in that** the drink is manufactured by using spruce sprout or equivalent conifer sprout, water, carbon acid and citric acid.

2. Use of acid carbon as a preservative according to claim 1, **characterized in that** the drink is manufactured by using spruce sprout or equivalent conifer sprout, water, carbon acid, and citron.

3. Use of carbon acid as a preservative according to claim 1, **characterized in that** the drink is manufactured by using spruce sprout or equivalent conifer sprout, water, and carbon acid by mixing carbon acid to a liquid of water and spruce sprout or equivalent conifer sprout.

4. Use of carbon acid as a preservative according to claim 1, **characterized** in thatthe drink is manufactured by using spruce sprout or equivalent conifer sprout, water, and carbon acid, the spruce sprout or equivalent conifer sprout being in form of powder, and the powder is mixed to the water and carbon acid.

5. Use of carbon acid as a preservative according to claim 1, **characterized in that** the drink is manufactured by using spruce sprout or equivalent conifer sprout, water, carbon acid and citron acid by mixing carbon acid and citron acid to a liquid of water and spruce sprout or equivalent conifer sprout.

6. Use of carbon acid as a preservative according to claim 1, **characterized in that** the drink is manufactured by using spruce sprout or equivalent conifer sprout, water, carbon acid and citron by mixing carbon acid and citron to a liquid of water and spruce sprout or equivalent conifer sprout.

7. Use of carbon acid as a preservative according to claim 1, **characterized in that** the drink is manufactured by using spruce sprout or equivalent conifer sprout, water, carbon acid and citron acid, the spruce sprout or equivalent conifer sprout being in form of powder, and the powder is mixed to the water, carbon acid and citron acid.

8. Use of carbon acid as a preservative according to any of claims 1-7 **characterized in that** the drink is manufactured by disolving carbondioxide in water in order to form said carbon acid.

9. Use of carbon acid as a preservative according to any of claims 1-8 **characterized in that** the water is natural mineral water.

10. Use of carbon acid as a preservative according to any of claims 1-9 **characterized in that** sugar is added or formed to the healthy drink.

## Patentansprüche

1. Verwendung von Kohlensäure als Konservierungsmittel bei der Herstellung eines gesunden Getränkeproduktes, **dadurch gekennzeichnet, dass** das Getränk unter Verwendung von Fichtensprossen oder gleichwertigen Nadelbaumsprossen, Wasser, Kohlensäure und Zitronensäure hergestellt wird.

2. Verwendung von Kohlensäure als Konservierungsmittel nach Anspruch 1, **dadurch gekennzeichnet, dass** das Getränk unter Verwendung von Fichtensprossen oder gleichwertigen Nadelbaumsprossen, Wasser, Kohlensäure und Zitrone hergestellt wird.

3. Verwendung von Kohlensäure als Konservierungsmittel nach Anspruch 1, **dadurch gekennzeichnet, dass** das Getränk unter Verwendung von Fichtensprossen oder gleichwertigen Nadelbaumsprossen, Wasser und Kohlensäure durch Mischen von Kohlensäure mit einer Flüssigkeit aus Wasser und Fichtensprossen oder gleichwertigen Nadelbaumsprossen hergestellt wird.

4. Verwendung von Kohlensäure als Konservierungsmittel nach Anspruch 1, **dadurch gekennzeichnet, dass** das Getränk unter Verwendung von Fichtensprossen oder gleichwertigen Nadelbaumsprossen, Wasser und Kohlensäure hergestellt wird, wobei die Fichtensprossen oder gleichwertige Nadelbaumsprossen in Pulverform vorliegen, und das Pulver mit Wasser und Kohlensäure vermischt wird.

5. Verwendung von Kohlensäure als Konservierungsmittel nach Anspruch 1, **dadurch gekennzeichnet, dass** das Getränk unter Verwendung von Fichtensprossen oder gleichwertigen Nadelbaumsprossen, Wasser, Kohlensäure und Zitronensäure durch Mischen von Kohlensäure und Zitronensäure mit einer Flüssigkeit aus Wasser und Fichtensprossen oder gleichwertigen Nadelholzsprossen hergestellt wird.

6. Verwendung von Kohlensäure als Konservierungsmittel nach Anspruch 1, **dadurch gekennzeichnet, dass** das Getränk unter Verwendung von Fichtensprossen oder gleichwertigen Nadelbaumsprossen, Wasser, Kohlensäure und Zitrone durch Mischen von Kohlensäure und Zitrone mit einer Flüssigkeit aus Wasser und Fichtensprossen oder gleichwertigen Nadelbaumsprossen hergestellt wird.

7. Verwendung von Kohlensäure als Konservierungsmittel nach Anspruch 1, **dadurch gekennzeichnet, dass** das Getränk unter Verwendung von Fichtensprossen oder gleichwertigen Nadelbaumsprossen, Wasser, Kohlensäure und Zitronensäure hergestellt wird, wobei die Fichtensprossen oder gleichwertigen Nadelbaumsprossen in Pulverform vorliegen und das Pulver mit Wasser, Kohlensäure und Zitronensäure vermischt wird.

8. Verwendung von Kohlensäure als Konservierungsmittel nach einem der Ansprüche 1-7, **dadurch gekennzeichnet, dass** das Getränk durch Auflösen von Kohlendioxid in Wasser hergestellt wird, um die Kohlensäure zu bilden.

9. Verwendung von Kohlensäure als Konservierungsmittel nach einem der Ansprüche 1-8, **dadurch gekennzeichnet, dass** das Wasser natürliches Mineralwasser ist.

10. Verwendung von Kohlensäure als Konservierungsmittel nach einem der Ansprüche 1-9, **dadurch gekennzeichnet, dass** dem gesunden Getränk Zucker zugesetzt oder gebildet wird.

## Revendications

1. Utilisation d'acide carbonique comme conservateur dans la fabrication d'une boisson saine, **caractérisé en ce que** la boisson est fabriquée en utilisant des pousses d'épicéa ou des pousses de conifères équivalentes, de l'eau, de l'acide carbonique et de l'acide citrique.

2. Utilisation d'acide carbonique comme conservateur selon la revendication 1, **caractérisée en ce que** la boisson est fabriquée en utilisant des pousses d'épicéa ou des pousses de conifères équivalentes, de l'eau, de l'acide carbonique et du cédrat.

3. Utilisation d'acide carbonique comme conservateur selon la revendication 1, **caractérisée en ce que** la boisson est fabriquée en utilisant des pousses d'épinette ou des pousses de conifères équivalentes, de l'eau et de l'acide carbonique en mélangeant de l'acide carbonique à un liquide composé d'eau et de pousses d'épicéa ou de pousses de conifères équivalentes.

4. Utilisation d'acide carbonique comme conservateur selon la revendication 1, **caractérisée en ce que** la boisson est fabriquée à partir de pousses d'épicéa ou de pousses de conifères équivalentes, d'eau et d'acide carbonique, de pousses d'épicéa ou de pousses de conifères équivalentes se présentant sous forme de poudre, et la poudre est mélangée à l'eau et à l'acide carbonique.

5. Utilisation d'acide carbonique comme conservateur selon la revendication 1, **caractérisée en ce que** la boisson est fabriquée en utilisant des pousses d'épicéa ou des pousses de conifères équivalentes, de l'eau, de l'acide carbonique et de l'acide cédrat en mélangeant de l'acide carbonique et de l'acide cédrat à un liquide composé d'eau et de pousses d'épicéa ou de pousses de conifères équivalentes.

6. Utilisation d'acide carbonique comme conservateur selon la revendication 1, **caractérisée en ce que** la boisson est fabriquée en utilisant des pousses d'épinette ou des pousses de conifères équivalentes, de l'eau, de l'acide carbonique et du citron en mélangeant de l'acide carbonique et du citron à un liquide composé d'eau et de pousses d'épinette ou de pousses de conifères équivalentes.

7. Utilisation d'acide carbonique comme conservateur selon la revendication 1, **caractérisée en ce que** la boisson est fabriquée en utilisant des pousses d'épicéa ou des pousses de conifères équivalentes, de l'eau, de l'acide carbonique et de l'acide cédrat, les pousses d'épicéa ou des pousses de conifères équivalentes étant sous forme de poudre, et la poudre est mélangée à l'eau, acide carbonique et acide cédrat.

8. Utilisation d'acide carbonique comme conservateur selon une quelconque des revendications 1 à 7, **caractérisé en ce que** la boisson est fabriquée en dissolvant du dioxyde de carbone dans de l'eau afin de former ledit acide carbonique.

9. Utilisation d'acide carbonique comme conservateur selon une quelconque des revendications 1 à 8, **caractérisé en ce que** l'eau est une eau minérale naturelle.

10. Utilisation d'acide carbonique comme conservateur selon une quelconque des revendications 1 à 9, **caractérisée en ce que** du sucre est ajouté ou formé à la boisson saine.
